# FASCICULE DE BREVET EUROPEEN

(11) **EP 1 521 728 B1**
(45) Date de publication et mention de la délivrance du brevet: **03.02.2010**
(21) Numéro de dépôt: 03750794.4
(22) Date de dépôt: 09.07.2003
(51) Int. Cl.: C04B 30/02, C04B 26/14, C03C 25/34, C08L 63/02, C08G 59/50

(54) **PRODUIT D' ISOLATION NOTAMMENT THERMIQUE ET SON UTILISATION**
DÄMMUNGSKÖRPER INSBESONDERE WÄRMEDÄMMUNGSKÖRPER UND SEINE VERWENDUNG
INSULATION PRODUCT, PARTICULARLY A THERMAL INSULATION PRODUCT AND ITS USE

(30) Priorité: 12.07.2002 FR 0208873
(43) Date de publication de la demande: 13.04.2005
(73) Titulaire: SAINT-GOBAIN ISOVER, 92400 Courbevoie (FR)
(72) Inventeur: ESPIARD, Philippe, F-60270 Gouvieux (FR); MAHIEUXE, Bruno, F-60290 Neuilly sous Clermont (FR)
(74) Mandataire: Colombier, Christian
(86) Numéro de dépôt international: PCT/FR2003/002139
(87) Numéro de publication internationale: WO 2004/007395

(56) Documents cités:
- EP-A- 0 148 050
- EP-A- 0 369 848
- EP-A- 0 539 290
- EP-A- 0 633 295
- DE-A- 4 325 267
- NL-A- 8 003 965
- DATABASE WPI Section Ch, Week 197734 Derwent Publications Ltd., London, GB; Class A93, AN 1977-60711Y XP002232696 & SU 541 826 A (UKR PULP PAPER RES), 3 février 1977 (1977-02-03)

## Description

L'invention a trait à l'utilisation d'un nouveau produit à base de fibres minérales à haute température (à plus de 150°C, notamment de 200 à 500°C, voire jusqu'à 700°C et plus pour certaines fibres minérales), notamment à base de fibres de verre ou de fibres de roche, tels par exemple les mats de fibres minérales destinés à l'isolation thermique et/ou phonique de bâtiments ou d'appareils.

La plupart des matériaux isolants à base de fibres minérales comportent un liant qui assure la tenue mécanique du matériau c'est-à-dire un lien entre les fibres. Ce liant doit être dispersé de façon homogène sur les fibres pour éviter que ne se forment des îlots de fibres entourées d'une gangue de liant dans un ensemble de fibres non liées, plus cassantes et donc plus poussiéreuses.

Il est connu d'utiliser des résines thermodurcissables phénoplastes (phénol-formol) ou aminoplastes (mélamine formol ou urée-formol). Les résines les plus usitées sont des résols, produits de la condensation - en présence de catalyseurs alcalins ou alcalino-terreux - de phénols, possédant des emplacements ortho et para vacants, et d'aldéhydes (principalement de formaldéhyde). Ces résines entrent dans une composition d'encollage qui contient de plus de l'eau, agent de dilution, de l'urée qui sert à diminuer le taux de formol libre et agit également comme liant, et divers additifs tels que de l'huile, de l'ammoniaque, des colorants et éventuellement des charges.

Pour des applications où le produit à base de fibres minérales peut être soumis à des températures élevées, notamment plus de 150°C, en particulier plus de 200°C; voire même plus de 300°C et parfois même plus de 400°C, les liants classiques de type phénoplastes ne donnent pas satisfaction car ceux ci se décomposent et génèrent des émissions gazeuses susceptibles d'être indésirables, notamment du formaldéhyde, du methylisocyanate (noté par la suite MIC) et/ou de l'acide isocyanique (noté par la suite ICA) et/ou d'autres composés volatils organiques (noté par la suite COV). En effet des émissions de MIC et/ou d'ICA commencent à être décelées à partir de 150°C, et deviennent significatives au delà de 200°C quand on chauffe des produits fabriqués avec des liants classiques de type phénoplastes.

Afin de réduire les émissions de MIC avec des résines de type phénoplaste, il a été proposé d'utiliser des encollages à base de résine formophénolique et sensiblement exempts d'urée ou de dérivés d'urée, ainsi que la demanderesse l'a décrit dans la demande de brevet Européen EP 1 022 263. Cette solution permet de réduire très sensiblement les émissions de MIC susceptibles d'avoir lieu quand le produit est chauffé, mais ne donne pas complètement satisfaction car il en résulte un moins bon piégeage du formaldéhyde émis au cours de la fabrication du produit qu'avec un encollage classique (par exemple du type de ceux décrits dans le brevet de la demanderesse EP 0 480 778).

Il est encore connu d'utiliser des résines organiques du type epoxy pour la réalisation d'encollages pour fibres minérales (voir EP-A-369 848 ; NL-A-8 003 965 ; SU-A-541 826 ; EP-A-539 290).

Un autre moyen permettant de résoudre le problème des émissions est connu et consiste à utiliser des liants minéraux à la place de liants à base de résines organiques. Ces liants minéraux résolvent avantageusement le problème de l'émission de gaz indésirables jusqu'à 500°C, voire jusqu'à 700°C mais présentent des inconvénients importants qui limitent leur utilisation. Des liants à base de phosphate d'aluminium conviennent pour cette utilisation, notamment ceux commercialisés par la société italienne POLETTO sous l'appellation commerciale Legareff:

D'une part la fabrication de tels produits est parfois rendue difficile car on note une tendance importante au collage sur la ligne, notamment sur les tapis convoyeurs.

D'autre part la qualité mécanique du produit isolant obtenu avec de tels liants est très inférieure à celle de produits obtenus avec des liants phénoplastes. On note en effet que le liant minéral est sensible à l'humidité et on observe fréquemment un gonflement du produit au cours de son stockage . En outre on observe un délaminage important dans le produit et des risques d'arrachement de partie du produit en cours de manipulation

Notons que les applications d'isolant fibreux susceptibles de résister aux températures élevées mentionnées se trouvent par exemple dans les domaines des fours (notamment électroménager), du calorifugeage (notamment de tuyaux où l'on utilise l'isolant sous forme de coquilles), de la protection au feu (portes coupe feu par exemple), du transport, du nucléaire.

Il apparaît que de telles applications nécessitent pour la production de produits finis, des étapes de manipulation, façonnage, ajustement des produits isolants utilisés.

L'utilisation de produits isolant comprenant un liant minéral conduit à des mises en oeuvre beaucoup plus difficiles qu'avec des produits isolants comprenant un liant à base de résine organique, et souvent à des taux de rebuts élevés.

C'est un objet de l'invention que de sélectionner un produit d'isolation thermique et/ou phonique à base de fibre minérales liées par une résine organique polymérisée qui peut être utilisé à plus de 150°C, notamment entre 200 et 500°C, voire même jusqu'à 700°C et plus dans le cas des fibres de roche, en diminuant considérablement l'émission de gaz indésirable par rapport aux solutions connues de l'art antérieur.

Notons que l'utilisation de produits isolants à base de fibres de verre, notamment de composition boro-silico-sodo-calcique, est limitée à des températures d'environ 500°C, alors qu'on peut utiliser des produits à base de fibre de roche, comprenant en général un faible taux d'alcalins, jusqu'à 750°C, voire à des températures encore plus élevées.

Les critères de sélection d'un liant sont extrêmement nombreux et relèvent de différents ordres, sans perdre de vue toutefois qu'un liant doit avant tout adhérer correctement au verre.

Tout d'abord, il est indispensable que le liant soit compatible rhéologiquement avec le procédé de fabrication des fibres. Sans entrer dans des détails ici hors de propos, indiquons que les fibres de verre sont usuellement produites au moyen d'un centrifugeur dont l'axe est orienté verticalement et dans lequel on introduit un jet continu de verre en fusion. Le verre est projeté vers la paroi périphérique du centrifugeur dont il s'échappe sous forme de filaments par une multiplicité de petits orifices ; lesdits filaments étant étirés et entraînés vers le bas au moyen d'un courant gazeux à haute température et haute pression. Les fibres obtenues sont recueillies sur un convoyeur perméable aux gaz et forment ainsi un matelas plus ou moins épais, en fonction de la vitesse du convoyeur. Dans le cas de fibres de roche, on produit usuellement les fibres avec un centrifugeur à axe horizontal.

L'encollage doit se répartir sur la fibre ainsi produite, pour ensuite se retrouver de préférence aux points de jonction entre fibres et permettre d'obtenir un matelas fibreux élastique ; il est donc préférable de pulvériser la composition d'encollage lorsque les fibres sont encore unitaires, c'est-à-dire avant que ne se constitue le matelas. En conséquence, l'encollage est pulvérisé dans la hotte de réception des fibres, en dessous des brûleurs générant le courant gazeux d'étirage. Le corollaire à cette option est l'interdiction d'utiliser des solvants organiques inflammables et/ou polluants, pour la formulation de l'encollage, le risque d'incendie et/ou de pollution dans la hotte de réception étant trop important. De plus, la résine servant de liant ne doit pas polymériser trop rapidement avant la mise en forme désirée.

D'autre part, si cette polymérisation ne doit pas être trop rapide, elle doit pouvoir toutefois ne pas être trop longue (risques de prégélification ), car la polymérisation complète doit être achevée en un temps compatible avec des vitesses de production élevées après un séjour dans une étuve à haute température (de l'ordre de 250°C) .

Enfin, la résine et son procédé de mise en oeuvre doivent être d'un coût relativement modéré, compatible avec celui du fibrage du verre et ne pas conduire directement ou indirectement à la formation d'effluents indésirables ou polluants.

Ces buts sont atteints grâce à l'utilisation d'un produit d'isolation thermique et/ou phonique qui comprend au moins 1 % en poids d'une résine organique polymérisée et qui libère moins de 50 mg/kg (de produit), notamment moins de 20 mg/kg de formaldéhyde et moins de 50 mg/kg (de produit), notamment moins de 20 mg/kg de méthylisocyanate (MIC) lorsqu'il est porté à 350°C pendant au moins 15 minutes. La résine conforme à l'utilisation selon l'invention est constituée substantiellement par au moins une résine de type EPOXY ayant une valeur de EEW (Epoxy Equivalent Weight, paramètre connu de l'homme du métier qui correspond au poids de résine, en gramme par mole de fonction époxy), est comprise entre 150 et 2000, de préférence au moins 160 et/ou au plus 700, voire même au moins 170 et/ou au plus 300. En effet, les inventeurs ont su montrer que ces résines permettent avantageusement d'obtenir de très faibles taux de gaz indésirables émis et sont compatibles avec les procédés connus de pulvérisation d'encollage utilisés dans l'industrie des fibres minérales destinées à l'isolation. Les produits d'isolation thermique et/ou phonique qui font l'objet de l'utilisation selon l'invention comprennent au moins 1%, voire au moins 2% et même plus de 4% en masse de liant polymérisé à partir de l'encollage.

On obtient ainsi avantageusement la facilité d'emploi d'une résine organique (soluble ou émulsifiable ou dispersable dans l'eau et donc facile à pulvériser). Les produits isolants fabriqués avec de telles résines sont facilement manipulables et façonnables. De manière surprenante, ces produits ne génèrent pas, ou très peu, de gaz indésirables lors d'utilisation à plus de 150°C, notamment entre 200 et 500°C, voire même jusqu'à 700°C et plus dans le cas des fibres de roche.

On entend par gaz indésirables notamment le formaldehyde, le MIC, l'ICA, les autres composés volatils organiques (COV).

On caractérise pour les besoins de l'invention la quantité de gaz émis par un échantillon de produit d'isolation à base de fibres minérales comprenant un liant et porté à 350°C, notamment pendant au moins 15 minutes, de préférence 20 minutes, notamment une heure, voire davantage, ce qui est représentatif du fonctionnement de l'isolant pour les applications visées. En effet on peut considérer qu'après un séjour d'une heure à 350°C, la quasi totalité des gaz indésirables ont été émis. On mesure la quantité de gaz émis rapportée au poids de produit testé. On considère qu'il y a peu de gaz indésirable émis si leur quantité mesurée avec le test ci-dessus est inférieure à 50mg/kg, de préférence inférieure à 20mg/kg et même à 10mg/kg.

L'utilisation selon l'invention des produits d'isolation thermique et/ou phoniques à base de fibres minérales à plus de 150°C, notamment entre 200 et 500°C, voire même jusqu'à 700°C et plus dans le cas des fibres de roche qui comprennent au moins 1%, voire au moins 2% et même plus de 4% en poids d'une résine organique polymérisée permet de libérer moins de 50 mg/kg (de produit), notamment moins de 20 mg/kg et même moins de 15 mg/kg de formaldéhyde et moins de 50 mg/kg (de produit), notamment moins de 20 mg/kg et même moins de 10 mg/kg de methylisocyanate (MIC) lorsque lesdits produits sont portés à 350°C pendant au moins 15 minutes.

Un encollage qui convient pour fabriquer les produits conformes à l'invention est obtenu en diluant ou en émulsifiant dans l'eau une résine ou un mélange de résines constitué(e) substantiellement par au moins une résine époxy dont la valeur de EEW est comprise entre 150 et 2000, de préférence au moins 160 et/ou au plus 700, voire même au moins 170 et/ou au plus 300, avec un durcisseur aminé non volatil, et comportant des additifs calculés en parts pondérales pour 100 parts de résine sèche. On ajoute de préférence 0,1 à 2 parts de silane et/ou 0 à 15 parts d'une huile minérale, en parts calculées pour 100 parts de résine sèche.

Le durcisseur aminé est notamment caractérisé par le poids équivalent amine/H défini par le rapport MW (molecular weight = poids moléculaire de l'amine sur nombre d'hydrogène actif). Les amines préférées ont un poids équivalent amine/H , noté « taux NH », compris entre 20 et 300.

Parmi les résines EPOXY utilisables dans le cadre de l'invention on cite les résines de type éther glycidylique, décrites dans le brevet européen de la demanderesse EP 0 369 848.

Les résines EPOXY décrites dans la demande EP 0 369 848 sont particulièrement avantageuses. Dans cette demande ces résines sont décrites comme intéressantes car notamment elles ne conduisent pas directement ou indirectement à la formation d'effluents indésirables ou polluants au cours du fibrage et du traitements ultérieur dans l'étuve (environ 250°C). Cependant, rien ne laissait présager que de telles résines pouvaient permettre de fabriquer des produits pouvant être utilisés à plus de 150°C, notamment entre 200 et 500°C, voire même jusqu'à 700°C et plus dans le cas des fibres de roche, avec notamment de très faibles émissions de MCI et de ICA.

Parmi les résines époxy de type éther glycidylique, se sont révélées particulièrement appropriées les résines suivantes, citées selon leurs appellations commerciales :
- résine en émulsion de la société RESOLUTION : epirez 3510w60 (EEW =185 à 215), epirez 3515w60 (EEW = 225-275), epirez 3522w60 (EEW = 615-715)
- résine à émulsionner de la société RESOLUTION : epicote 828 (EEW = 184 à 190), epicote 255 (EEW =193 à 205)
- résine à émulsionner de DOW CHEMICAL : DER330 (EEW =176-185), DER331 (EEW=182-192),

D'autres résines époxy de type éther glycidylique sont particulièrement avantageuses car elles permettent de conférer au produit une résistance en température et au feu améliorée. Il s'agit des résines époxy de type éther glycidylique halogénées, notamment des dérivés d'ether glycidyl dibronophenyl, comme par exemple les composés suivants:

Dibromophenyl glycidyl éther, 2-methyl-4,6-dibromophenyl glycidyl ether, 4-methyl-2,6-dibromophenyl glycidyl éther, 2-butyl-4,6-dibromophenyl glycidyl ether, 4-isooctyl-2,6-dibromophenyl glycidyl éther, 2-phenyl-4,6dibromophenyl glycidyl éther, 4-cumyl-2,6-dibromophenyl glycidyl éther.

Une autre famille de résines époxy donne également de bons résultats : il s'agit des résines époxy novolaques, comme par exemple les résines Epirez 5003-w55 (EEW =195 à 215)

Il est également possible et avantageux d'utiliser un mélange de résines époxy décrites ci-dessus.

Pour ce qui est de l'amine utilisée comme durcisseur, on peut utiliser des amines aliphatiques, cycloaliphatiques ou aromatiques, des imidazoles, des hydrazides polyfonctionnels ou du dyciandiamide.

A titre d'exemples selon l'invention, on cite :
- amines aliphatiques, : diéthylene triamine, triéthylene tétramine, tétra éthylène pentamine (TEPA) -telle que l'épicure 3295 de RESOLUTION-, polyglycoldiamine, m-xylylenediamine
- amines cycloaliphatiques : 1,3-bis (aminométhyl)cyclohexane, 4,4 diamino-cyclohexyl-methane, méthanediamine, 2,6 diamino-cyclohexanols
- amines aromatiques : métaphenylene diamine, diamine diphényle sulfone, diéthyltoluene diamine
- imidazoles telles que l'imidazole, 1-methylimidazole, 2-methylimidazole, 2 undecylimi-dazole, 2-ethyl-4-methylimidazole, 2-phenulimidazole.

L'invention porte également sur un produit d'isolation thermique et/ou phonique, à base de fibres minérales, susceptible d'être utilisé à plus de 150°C, notamment entre 200 et 500°C, voire même jusqu'à 700°C et plus dans le cas des fibres de roche, comprenant au moins 1 %, voire au moins 2 % et même plus de 4 % en poids d'un liant obtenu à partir d'un encollage dont la résine ou le mélange de résines est constitué(e) substantiellement par au moins une résine de type époxy dont la valeur de EEW comprise entre 150 et 2000, de préférence au moins 160 et/ou au plus 700, voire même au moins 170 et/ou au plus 300, qui comprend en outre un voile de fibres minérales, notamment de fibres de verre, dont le grammage est par exemple compris entre 10 et 300 g/m², disposé sur au moins une des surfaces extérieures dudit produit isolant. De manière préférée, ledit voile comprend au moins 1 %, voire au moins 2 % et même plus de 4 % en poids d'un liant obtenu à partir d'un encollage dont la résine ou le mélange de résines est constitué(e) substantiellement par au moins une résine de type EPOXY dont la valeur de EEW est comprise entre 150 et 2000, de préférence au moins 160 et/ou au plus 700, voire même au moins 170 et/ou au plus 300.

On note qu'après polymérisation du liant les fonctions époxy ont réagi au cours de la polymérisation et qu'on observe des ponts amines et des fonctions alcools dans le liant qui enrobe les fibres.

En outre le produit est blanc, si aucun colorant n'a été ajouté.

La fabrication du produit d'isolation thermique et/ou acoustique à base de fibres minérales, notamment de fibres de verre susceptible utilisable dans les conditions de l'invention à plus de 150°C, notamment entre 200 et 500°C, voire même jusqu'à 700°C et plus dans le cas des fibres de roche, comprend les étapes suivantes :
a) préparation d'un encollage constitué substantiellement d'eau, d'une résine ou d'un mélange de résines constitué(e) substantiellement d'au moins une résine époxy dont la valeur de EEW est comprise entre 150 et 2000, de préférence au moins 160 et/ou au plus 700, voire même au moins 170 et/ou au plus 300, dispersable dans l'eau, d'au moins un durcisseur aminé et d'additifs (en part calculées pour 100 parts de résine sèche) notamment entre 0,1 et 2 % de silane et notamment entre 0 et 15 % d'une huile minérale,
b) fibrage, notamment par centrifugation interne (axe vertical du centrifugeur, notamment pour les fibres de verre) ou externe (axe horizontal du centrifugeur, notamment pour les fibres de roche), d'une composition de matière minérale fondue et pulvérisation de l'encollage préparé à l'étape a) sur les fibres,
c) polymérisation de l'encollage dans une étuve, notamment autour de 250°C pour former un matelas fibreux compressible.

Dans un mode de réalisation préféré, l'encollage de l'étape a) comprend une résine époxy du type éther glycidylique dispersable dans l'eau et un durcisseur aminé dont le point éclair est supérieur à 150°C.

Avantageusement, au moins une résine époxy précitée est un éther glycidylique d'indice de polymérisation n inférieur à 1 et de préférence inférieur à 0,2.

Selon un autre mode de réalisation préféré, l'encollage de l'étape a) comprend une résine époxy de type novolac dispersable dans l'eau.

Il va sans dire qu'un mélange des résines précitées est compris dans l'invention.

De manière préférée la masse molaire équivalente NH d'au moins un durcisseur est inférieure à 100g.

Suivant un mode de réalisation préféré, au moins un durcisseur est à base de dicyane diamide (DCN).

L'application du procédé ci dessus permet l'obtention de produits isolants dont la masse volumique est comprise entre 4 et 200 kg/m³.

L'utilisation du produit selon l'invention s'applique à l'isolation des parois d'objets susceptibles d'être portées à des températures de plus de 150°C, notamment entre 200 et 500°C, voire même jusqu'à 700°C et plus dans le cas des fibres de roche, comme notamment des parois de four, de tuyaux, d'éléments coupe-feu, de matériel de transport, de matériel destiné à des applications dans le nucléaire.

D'autres caractéristiques de l'invention sont exposées en détail ci-après, en référence aux tests comparatifs effectués avec les encollages A, B, C, D, E, répondant aux formulations suivantes (de manière usuelle on formule sur 100 parts la résine et le catalyseur ou durcisseur, et on indique les additifs en parts supplémentaires). Exemples comparatifs A, B, C :

| | | |
|---|---|---|
| Encollage A : | .résine phénolique | 80 parts |
| | . Urée | 20 parts |
| | . Amino silane | 0.5 part |
| | . Huile minérale | 9 parts |
| | . Sulfate d'ammonium | 3 parts |
| | . Ammoniaque (solution à 20%) | 6 parts |

La résine phénolique utilisée pour l'encollage A est du type de celles décrites dans la demande de brevet EP 0 148 050 et correspond à celle utilisée pour la fabrication de produits isolation standards.

| | | |
|---|---|---|
| Encollage B : | . résine phénolique | 100 parts |
| | . Urée | 0 parts |
| | . Amino silane | 0.5 part |
| | . Huile minérale | 9 parts |
| | . Sulfate d'ammonium | 3 parts |
| | . Ammoniaque (solution à 20%) | 6 parts |

Cet encollage est du type de ceux décrits dans EP 1 022 263 (exemple numéro 1)

| | | |
|---|---|---|
| Encollage C : | . liant minéral à base de phosphate d'aluminium | 100 parts |
| | . Amino silane | 0.5 part |
| | . Huile | 9 parts |

Exemples selon l'invention D, E :

| | | |
|---|---|---|
| Encollage D : | . résine epoxy : epirez 3510w60 de Résolution, | 88 parts |
| | . Durcisseur DCN (dicyandiamide) | 12 parts |
| | . Accelerateur 2,4,6,-tris (dimethylaminomethyl)phenol | 1 part |
| | . Amino silane | 0.5 part |
| | . Huile | 9 parts |
| Encollage E : | . résine epoxy : epirez 3510w60 de Résolution, | 80 parts |
| | . Durcisseur : TEPA | 20 parts |
| | . Amino silane | 0.5 part |
| | . Huile | 9 parts |

Des produits isolants ont été fabriqués dans des conditions de fibrages identiques, avec la pulvérisation des encollages ci-dessus, de manière à ce que les produits comprennent 4,5% de liant en masse.

Ces produits ont fait l'objet de mesure d'émission de gaz.

Le protocole de mesure est le suivant: ces compositions d'encollage ont été pulvérisées sur des fibres de laine minérale, la quantité pulvérisée étant la même pour tous les échantillons. Un prélèvement de 1 gramme de chaque échantillon (après polymérisation du liant) a été chauffé durant une heure dans un foui tubulaire à 350°C avec un débit d'air de 2 l/min. On mesure la quantité d'isocyanate de méthyle (MIC) et d'ICA véhiculées par l'air en sortie du four conformément à la norme OSHA n°54 (piégeage du MIC sur un piège solide imprégné d'un réactif captant le MIC et l'ICA puis dans une barboteur de garde contenant le même réactif, et enfin dosage par HPLC à détection à fluorescence UV du MIC et de l'ICA). On mesure les émissions de formaldehyde par la quantité de formaldehyde qui se dégage d'un produit fini chauffé à 350°C dans un four tubulaire : 10 g d'échantillon sont placés dans le four tubulaire à 350°C. et un courant gazeux d'air reconstitué traverse l'échantillon pendant 1 heure ; le formol dégagé est piégé dans 2 barboteurs en série remplis de 50 ml d'eau qualité HPLC ; on mesure le formol dans chaque barboteur par la méthode de Lange et on exprime le résultat en formaldehyde (mg) par kg de produit. Les résultats des essais sont portés dans le tableau 1.

**Tableau 1**

| **Encollage** | **Formaldehyde mg/kg de produit** | **MIC (methy isocyanate mg/kg de produit** | **ICA (isocyanic acid) mg/kg de produit** |
|---|---|---|---|
| A | 60 | 90 | 140 |
| B | 110 | 18 | 20 |
| C | 8 | 2 | 2 |
| D | 8 | 1,5 | 10 |
| E | 11 | 2 | 8 |

Il apparaît clairement que les résultats obtenus avec les produits utilisés dans les conditions de l'invention sont remarquables et se distinguent très nettement de l'art antérieur connu avec des liants organiques.

En effet les produits obtenus avec l'encollage D ou E émettent moins de 20 mg/kg de formaldehyde, moins de 10 mg/kg de MIC et moins de 20 mg/kg d'ICA, alors qu'aucune solution connue à base de phénoplaste ne permet de réduite à moins de 50 mg/kg les émissions de formaldehyde, et à moins de 10 mg/kg de MIC.

On obtient avec la solution de l'invention des résultats tous à fait équivalents à ceux obtenus avec des liants minéraux (exemple C) en ce qui concerne les émissions gazeuses.

Comme mentionné plus haut l'inconvénient des liants minéraux porte sur les propriétés mécaniques des produits obtenus avec de tels liants, qui sont très inférieures à celles obtenues avec des liants organiques et qui également se dégradent lors de vieillissement humide.

Pour illustrer ce point des essais comparatifs sont reportés dans le tableau 2 où figurent pour différentes masses volumique de produit (autour de 10 kg/m³ et 35 kg/m³) les résistances traction mesurées après fabrication (RT fab) et les résistances traction mesurées après un test de vieillissement accéléré, qui consiste à faire vieillir le produit 15 minutes dans un autoclave où la température est de 107°C sous 100 % d'humidité relative (RT15' autoclave).

Les résistances tractions (RT, en anglais parting strength), sont mesurées conformément à la norme ASTM C686-71T sur des échantillons annulaires découpés par estampage dans un produit prélevé après étape de polymérisation.

Un échantillon annulaire est disposé entre deux mandrins cylindriques d'une machine d'essais. Après déplacement à vitesse constante d'un des mandrins on mesure la force de rupture de l'anneau F (en gramme-force). On définit la résistance traction RT par le ratio F/M où M est la masse de l'échantillon (en grammes).

L' échantillon annulaire utilisé est un tore qui mesure 122 mm de longueur, 46 mm de largeur, dont le rayon de courbure de la découpe du bord extérieur est de 38 mm, et celui du bord interne de 12,5 mm.

**Tableau 2**

| **Encollage** | **Densité kg/m³** | **RT fab** | **RT 15' autoclave** |
|---|---|---|---|
| A | 11 | 230 | 114 |
| A | 35 | 350 | 175 |
| C | 32 | 160 | 40 |
| D | 12 | 220 | 80 |
| D | 35 | 370 | 140 |

Les résultats d'essais mécaniques prouvent que l'on obtient avec les produits utilisables dans le cadre de l'invention (exemple D) des résultats sensiblement équivalents (proches, et même parfois meilleurs) qu'avec les résines phénophates (exemple A) après fabrication et qui demeurent très satisfaisants après un test de vieillissement accéléré.

Ces résultats montrent que les propriétés mécaniques des produits qui conviennent pour l'utilisation selon l'invention sont très supérieures à celles de produits fabriqués avec un liant minéral (exemple C) après fabrication (facteur 2 dans les résultats) et après test de vieillissement accéléré (facteurs 3 à 4 dans les résultats).

## Revendications

1. Utilisation d'un produit d'isolation thermique et/ou phonique à base de fibres minérales, à plus de 150°C, notamment entre 200 et 500°C, dans laquelle le produit comprend au moins 1% en poids d'une résine organique polymérisée et libère moins de 50 mg/kg (de produit), notamment moins de 20 mg/kg, de formaldéhyde et moins de 50 mg/kg (de produit), notamment moins de 20 mg/kg, de méthylisocyanate (MIC) lorsqu'il est porté à 350°C pendant au moins 15 minutes.

2. Utilisation selon la revendication 1, ***caractérisée en ce que*** le produit comprend au moins 2%, notamment plus de 4% en poids de résine organique polymérisée.

3. Utilisation selon la revendication 1 ou 2, ***caractérisée en ce que*** le produit libère moins de 15 mg/kg (de produit) de formaldéhyde.

4. Utilisation selon l'une des revendications 1 à 3, ***caractérisée en ce que*** le produit libère moins de 10 mg/kg (de produit) de méthylisocyanate (MIC).

5. Utilisation selon l'une des revendications précédentes ***caractérisée en ce que*** la résine ou le mélange de résines est constitué(e) substantiellement par au moins une résine de type EPOXY de valeur de EEW comprise entre 150 et 2000.

6. Utilisation selon l'une des revendications précédentes, ***caractérisée en ce que*** le produit comprend en outre un voile de fibres minérales, notamment de fibres de verre, dont le grammage est compris entre 10 et 300g/m², disposé sur au moins une des surfaces extérieures dudit produit isolant, *et **en ce que*** ledit voile comprend au moins 1% en poids de liant obtenu à partir d'un encollage dont la résine ou le mélange de résines est constitué(e) substantiellement par au moins une résine de type EPOXY dont la valeur de EEW est comprise entre 150 et 2000.

7. Utilisation selon l'une des revendications précédentes dans laquelle on isole avec le produit des parois de four, de tuyaux, d'éléments coupe-feu, de matériel de transport, de matériel destiné à des applications dans le nucléaire.

8. Utilisation selon l'une des revendications précédentes dans laquelle le produit est fabriqué par un procédé qui comprend les étapes suivantes :
a) préparation d'un encollage constitué substantiellement d'eau, d'une résine ou d'un mélange de résines constitué(e) substantiellement d'au moins une résine époxy dont la valeur de EEW est comprise entre 150 et 2000, dispersable dans l'eau, d'au moins un durcisseur aminé et d'additifs (en parts calculées pour 100 parts de résine sèche) notamment entre 0,1 et 2 % de silane et notamment entre 0 et 15 % d'une huile minérale,
b) fibrage, notamment par centrifugation interne ou externe, d'une composition de matière minérale fondue et pulvérisation de l'encollage préparé à l'étape a) sur les fibres,
c) polymérisation de l'encollage dans une étuve, notamment autour de 250°C, pour former un matelas fibreux compressible.

9. Utilisation selon la revendication 5, 6 ou 8, ***caractérisée en ce que*** la résine présente une valeur de EEW au moins égale à 160 et au plus égale à 700, notamment au moins égale à 170 et au plus égale à 300.

10. Utilisation selon la revendication 8 ou 9, ***caractérisée en ce que*** la résine de l'encollage de l'étape a) comprend une résine époxy du type éther glycidylique dispersable dans de l'eau, et un durcisseur aminé dont le point éclair est supérieur à 150°C.

11. Utilisation selon l'une des revendications 8 à 10, ***caractérisée en ce* qu'**au moins une résine époxy est un éther glycidylique d'indice de polymérisation n inférieur à 1 et de préférence inférieur à 0,2.

12. Utilisation selon l'une des revendications 8 à 11, ***caractérisée en ce* qu'**au moins une résine de l'encollage de l'étape a) est à base d' une résine époxy du type novolac dispersable dans de l'eau

13. Utilisation selon l'une des revendications 8 à 12, ***caractérisée en ce que*** le taux NH d'au moins un durcisseur aminé est compris entre 20 et 300.

14. Utilisation selon la revendication 13, ***caractérisée en ce* qu'**au moins un durcisseur aminé est choisi parmi les composants ou les mélanges de composants suivants : amine aliphatiques, amines cycloaliphatiques, amines aromatiques, imidazoles, hydrazides polyfonctionnelles, dicyane diamide (DCN).

15. Utilisation selon l'une des revendications précédentes d'un produit isolant dont la masse volumique est comprise entre 4 et 200 kg/m³,

16. Produit d'isolation thermique et/ou phonique susceptible d'être utilisé à plus de 150°C, notamment entre 200 et 500°C, comprenant au moins 1% en poids de liant obtenu à partir d'un encollage dont la résine ou le mélange de résines est constitué(e) substantiellement par au moins une résine de type EPOXY de valeur de EEW comprise entre 150 et 2000, ***caractérisé en ce* qu'**il comprend en outre un voile de fibres minérales, notamment de fibres de verre, dont le grammage est compris entre 10 et 300g/m², disposé sur au moins une des surfaces extérieures dudit produit isolant, *et **en ce que*** ledit voile comprend au moins 1% en poids de liant obtenu à partir d'un encollage dont la résine ou le mélange de résines est constitué(e) substantiellement par au moins une résine de type EPOXY dont la valeur de EEW est comprise entre 150 et 2000.

17. Produit selon la revendication 16, ***caractérisé en ce que*** le voile comprend au moins 2%, notamment plus de 4% en poids de résine organique polymérisée.

18. Produit selon la revendication 16 ou 17, ***caractérisé en ce que*** la résine présente une valeur de EEW au moins égale à 160 et au plus égale à 700, notamment au moins égale à 170 et au plus égale à 300.

## Claims

1. The use of a thermal and/or acoustic insulation product based on mineral fibers, above 150°C, especially between 200 and 500°C, in which the product comprises at least 1% by weight of a cured organic resin and releases less than 50 mg/kg (of product), especially less than 20 mg/kg of formaldehyde and less than 50 mg/kg (of product), especially less than 20 mg/kg of methyl isocyanate (MIC) when it is heated to 350°C for at least 15 minutes.

2. The use according to claim 1, **characterized in that** the product comprises at least 2%, especially more than 4% by weight of cured organic resin.

3. The use according to claim 1 or 2, **characterized in that** the product releases less than 15 mg/kg (of product) of formaldehyde.

4. The use according to any of claims 1 to 3,
**characterized in that** the product releases less than 10 mg/kg (of product) of methyl isocyanate (MIC).

5. The use according to one of the preceding claims, **characterized in that** the resin or resin mixture consists substantially of at least one epoxy-type resin whose EEW value is between 150 and 2000.

6. The use according to one of the preceding claims, **characterized in that** the product furthermore comprises a web of mineral fibers, especially glass fibers, the grammage of which is between 10 and 300 g/m², placed on at least one of the outer surfaces of said insulating product, and **in that** said web comprises at least 1% by weight of binder obtained from a sizing composition, the resin or resin mixture of which consists substantially of at least one epoxy-type resin whose EEW value is between 150 and 2000.

7. The use according to one of the preceding claims in which the product is used to insulate walls of ovens, pipes, fire-resistant components, transportation equipment and equipment intended for applications in the nuclear industry.

8. The use as claimed in one of the preceding claims, in which the product is manufactured by a process which comprises the following steps:
a) preparation of a sizing composition consisting substantially of water, a resin or resin mixture consisting substantially of at least one water-dispersible epoxy resin whose EEW value is between 150 and 2000, at least one amine hardener and additives (in parts calculated per 100 parts of dry resin), especially between 0.1 and 2% of silane and especially between 0 and 15% of a mineral oil;
b) fiberizing, especially by the internal centrifugal process or external centrifugal process, of a molten mineral composition and spraying of the sizing composition compared in step a) onto the fibers; and
c) curing of the sizing composition in an oven, especially at around 250°C, in order to form a compressible fiber blanket.

9. The use according to claim 5, 6 or 8, **characterized in that** the resin has a EEW value at least equal to 160 and at most equal to 700, especially at least equal to 170 and at most equal to 300.

10. The use according to claim 8 or 9, **characterized in that** the resin of the sizing composition of step a) comprises a water-dispersible epoxy resin of the glycidyl ether type and an amine hardener whose flashpoint is above 150°C.

11. The use according to one of claim 8 to 10, **characterized in that** at least one epoxy resin is a glycidyl ether having a curing index n of less than 1 and preferably less than 0.2.

12. The use as claimed according to one of claims 8 to 11, **characterized in that** at least one resin of the sizing composition of step a) is based on a water-dispersible epoxy resin of the novolac type.

13. The use according to one of claims 8 to 12, **characterized in that** the NH number of at least one amine hardener is between 20 and 300.

14. The use according to claim 13, **characterized in that** at least one amine hardener is chosen from the following components or mixtures of components: aliphatic amines, cycloaliphatic amines, aromatic amines, imidazoles, polyfunctional hydrazides and dicyandiamide (DCN).

15. The use according to of the preceding claims of an insulating product whose density is between 4 and 200 kg/m³.

16. A thermal and/or acoustic insulation product that can be used above 150°C, especially between 200 and 500°C, which comprises at least 1% by weight of binder obtained from a sizing composition, the resin or resin mixture of which consists substantially of at least one epoxy-type resin whose EEW value is between 150 and 2000, **characterized in that** it furthermore comprises a web of mineral fibers, especially glass fibers, the grammage of which is between 10 and 300 g/m², placed on at least one of the outer surfaces of said insulating product, and **in that** said web comprises at least 1% by weight of binder obtained from a sizing composition, the resin or resin mixture of which consists substantially of at least one epoxy-type resin whose EEW value is between 150 and 2000.

17. Product according to claim 16, **characterized in that** the web comprises at least 2%, especially more than 4% by weight of cured organic resin.

18. Product according to claim 16 or 17, **characterized in that** the resin has a EEW value at least equal to 160 and at most equal to 700, especially at least equal to 170 and at most equal to 300.

## Patentansprüche

1. Verwendung eines Wärmedämm- und/oder Schalldämmprodukts auf Mineralfaserbasis oberhalb von 150 °C, insbesondere zwischen 200 und 500 °C, wobei das Produkt wenigstens 1 Gew.-% eines organischen polymerisierten Harzes enthält und weniger als 50 mg/kg (des Produkts), insbesondere weniger als 20 mg/kg Formaldehyd und weniger als 50 mg/kg (des Produkts), insbesondere weniger als 20 mg/kg Methylisocyanat (MIC), ausgetrieben bei 350 °C während wenigstens 15 Minuten, freisetzt.

2. Verwendung nach Anspruch 1, ***dadurch gekennzeichnet, dass*** das Produkt wenigstens 2 %, insbesondere mehr als 4 Gew.-% polymerisiertes organisches Harz enthält.

3. Verwendung nach Anspruch 1 oder 2, ***dadurch gekennzeichnet, dass*** das Produkt weniger als 15 mg/kg (des Produkts) Formaldehyd freisetzt.

4. Verwendung nach einem der Ansprüche 1 bis 3, ***dadurch gekennzeichnet, dass*** das Produkt weniger als 10 mg/kg (des Produkts) Methylisocyanat (MIC) freisetzt.

5. Verwendung nach einem der vorhergehenden Ansprüche, ***dadurch gekennzeichnet, dass*** das Harz oder die Mischung der Harze im Wesentlichen gebildet ist aus wenigstens einem Harz vom EPOXY-Typ, welches einen EEW-Wert zwischen 150 und 2000 aufweist.

6. Verwendung nach einem der vorhergehenden Ansprüche, ***dadurch gekennzeichnet, dass*** das Produkt unter anderem ein Mineralfaservlies, insbesondere aus Glasfasern, aufweist, dessen Grammatur zwischen 10 und 300 g/m² liegt, angeordnet auf wenigstens einer der äußeren Oberflächen des Dämmprodukts, *und dass* das Vlies wenigstens 1 Gew.-% Bindemittel enthält, welches erhalten wird aus einer Schlichte, deren Harz oder Mischung von Harzen im Wesentlichen gebildet ist aus wenigstens einem Harz vom EPOXY-Typ, dessen EEW-Wert zwischen 150 und 2000 liegt.

7. Verwendung nach einem der vorhergehenden Ansprüche, wobei man mit dem Produkt Ofenwände, Rohre, Brandschutzelemente, Transportmaterialien, Materialien, welche vorgesehen sind zur Anwendung in Kernkraftwerken, isoliert.

8. Verwendung nach einem der vorhergehenden Ansprüche, wobei das Produkt hergestellt ist durch ein Verfahren, welches die folgenden Stufen umfasst:
a) Herstellung einer Schlichte, im Wesentlichen enthaltend Wasser, ein in Wasser dispergierbares Harz oder eine Mischung von Harzen, welche im Wesentlichen wenigstens ein Epoxyharz enthält, dessen EEW-Wert zwischen 150 und 2000 liegt, wenigstens einen Aminhärter und Additive (Teile bezogen auf 100 Teile des trockenen Harzes), insbesondere zwischen 0,1 und 2 % Silan und insbesondere zwischen 0 und 15 % eines Mineralöls,
b) Zerfaserung, insbesondere durch interne oder externe Zentrifugation, einer geschmolzenen Mineralmasse und Aufsprühen der gemäß Stufe a) hergestellten Schlichte auf die Fasern,
c) Polymerisation der Schlichte in einem Trockenofen, insbesondere bei ca. 250 °C, um eine komprimierbare Fasermatte zu bilden.

9. Verwendung nach Anspruch 5, 6 oder 8, ***dadurch gekennzeichnet, dass*** das Harz einen EEW-Wert von wenigstens 160 bis höchstens 700, insbesondere von wenigstens 170 bis höchstens 300 aufweist.

10. Verwendung nach Anspruch 8 oder 9, ***dadurch gekennzeichnet, dass*** das Harz für die Schlichte gemäß Stufe a) ein in Wasser dispergierbares Epoxyharz vom Glycidylethertyp und einen Aminhärter enthält, dessen Flammpunkt oberhalb von 150 °C liegt.

11. Verwendung nach einem der Ansprüche 8 bis 10, ***dadurch gekennzeichnet, dass*** wenigstens ein Epoxyharz ein Glycidylether mit einem Polymerisationsindex n unterhalb von 1 und bevorzugt unterhalb von 0,2 ist.

12. Verwendung nach einem der Ansprüche 8 bis 11, ***dadurch gekennzeichnet, dass*** wenigstens ein Harz für die Schlichte gemäß Stufe a) auf einem in Wasser dispergierbaren Epoxyharz vom Novolaktyp basiert.

13. Verwendung nach einem der Ansprüche 8 bis 12, ***dadurch gekennzeichnet, dass*** der NH-Anteil des wenigstens einen Aminhärters zwischen 20 und 300 liegt.

14. Verwendung nach Anspruch 13, ***dadurch gekennzeichnet, dass*** wenigstens ein Aminhärter ausgewählt ist aus den folgenden Komponenten oder Mischungen von Komponenten: aliphatischen Aminen, cycloaliphatischen Aminen, aromatischen Aminen, Imidazolen, polyfunktionellen Hydraziden, Dicyandiamid (DCN).

15. Verwendung eines Dämmprodukts nach einem der vorhergehenden Ansprüche, dessen Dichte zwischen 4 und 200 kg/m³ liegt.

16. Wärmedämm- und/oder Schalldämmprodukt, ausgelegt zur Verwendung oberhalb von 150 °C, insbesondere zwischen 200 und 500 °C, welches wenigstens 1 Gew.-% Bindemittel enthält, erhalten aus einer Schlichte, deren Harz oder Mischung von Harzen im Wesentlichen gebildet ist aus wenigstens einem Harz vom EPOXY-Typ mit einem EEW-Wert, der zwischen 150 und 2000 liegt, ***dadurch gekennzeichnet, dass*** es unter anderem ein Vlies aus Mineralfasern, insbesondere Glasfasern, aufweist, dessen Grammatur zwischen 10 und 300 g/m² liegt, angeordnet auf wenigstens einer der äußeren Oberflächen des Dämmprodukts, *und dass* das Vlies wenigstens 1 Gew.-% Bindemittel enthält, erhalten aus einer Schlichte, deren Harz oder Mischung von Harzen im Wesentlichen gebildet ist aus wenigstens einem Harz vom EPOXY-Typ, dessen EEW-Wert zwischen 150 und 2000 liegt.

17. Produkt nach Anspruch 16, ***dadurch gekennzeichnet, dass*** das Vlies wenigstens 2 %, insbesondere mehr als 4 Gew.-% polymerisiertes organisches Harz enthält.

18. Produkt nach Anspruch 16 oder 17, ***dadurch gekennzeichnet, dass*** das Harz einen EEW-Wert von wenigstens 160 bis höchstens 700, insbesondere wenigstens 170 bis höchstens 300 aufweist.
